# EUROPEAN PATENT APPLICATION

(11) **EP 3 974 138 A1**
(43) Date of publication of application: **30.03.2022**
(21) Application number: 20198795.5
(22) Date of filing: 28.09.2020
(51) Int. Cl.: B29B 7/90, B29B 7/42, B29B 7/82, B29B 9/14, B29C 48/285, B29C 48/84, B29C 48/395, B29B 9/06

(54) **METHOD OF PRODUCING LONG FIBRE THERMOPLASTIC MATERIAL**

(71) Applicant: Nederlandse Organisatie voor toegepast- natuurwetenschappelijk Onderzoek TNO, 2595 DA 's-Gravenhage (NL); Chemelot Scientific Participations B.V., 6167 RD Geleen (NL)
(72) Inventor: HUISMAN, Marc Rudolf Stefan, 2595 DA is-Gravenhage (NL); CODOU, Amandine Marie Floriane Magali-Sophie, 2595 DA is-Gravenhage (NL)
(74) Representative: V.O.

(57) **Abstract**

A method of producing long fibre thermoplastic LFT extruded material, wherein the method comprises providing thermoplastic feed material, thermoplastic composite TPC feed material, for example flakes or chips, wherein the TPC feed material comprises pieces, wherein the pieces individually comprise both fibres and thermoplastic material, wherein the method comprises an extrusion step carried out in an extrusion system (1), wherein the extrusion system (1) comprises an extruder (2) having an extrusion direction (ED), wherein the extruder (2) comprises a barrel (3), a single screw (4), a first inlet opening (6) and an outlet opening (5), wherein the screw (4) provides a channel (8) in the extruder (2), and wherein the extrusion step involves supplying the thermoplastic feed material and the TPC feed material to the extruder (2), then conveying a mixture of the thermoplastic feed material and the TPC feed material to said outlet opening (5) to thereby give a compounded material C, then extruding the compounded material C through said outlet opening (5) to give LFT extruded material D.

## Description

### Field

The invention pertains to a method of producing long fibre thermoplastic (LFT) extruded material.

### Introduction

The present invention pertains in an aspect to a method of making long fibre thermoplastic (LFT) material, in particular for making LFT extruded material (extrudate). The LFT material can also be referred to as long fibre reinforced thermoplastic material. The LFT extruded material can for instance be used for producing a wide array of products comprising LFT materials, such as parts in automotive as door panels, instrument carrier or front-end of vehicles, and also parts in other fields such as electronics. The LFT extruded material is for instance used as a feedstock for injection moulding to form LFT products. The LFT extruded material is for instance cut to pellets and the pellets are used for injection moulding Injection moulding of LFT materials is known as such, and uses as feed material often LFT pellets. Such LFT pellets are for instance 5 to 15 mm long, preferably about 11 mm long, with a diameter of for instance 1-5 mm. The individual LFT pellets comprise fibres (*e.g*. carbon fibres, glass fibres or natural fibres) as well as thermoplastic polymer.

Current exemplary methods of making LFT pellets are based on wire coating or thermoplastic pultrusion using dry continuous fibres. Herein, 'dry' indicates that the fibres are not yet embedded in, for example, a thermoplastic material. For instance, in some prior art methods for making LFT pellets, dry fibres are wire-coated with a thermoplastic polymer. Wire coating and pultrusion each give strands of the coated or impregnated fibres which are dimensioned (e.g. cut) into pellets of e.g. 11 mm in length. Longer pellets are difficult to process with injection moulding. The fibres are continuous and are aligned in the strands obtained by wire coating and pultrusion. In the individual pellets made by cutting such strands, the fibres are aligned in parallel and extend in parallel arrangement over the length of the pellet. With the currently available typical production methods for making LFT pellets, the fibre length is equal to the pellet length. Long fibres are desirable because this contributes to the mechanical properties of the injection moulded LFT parts. Extrusion, as distinct from pultrusion, is generally not used for making LFT strands or pellets.

It is desired to provide a method of making LFT material, e.g. LFT pellets, wherein the produced LFT material is suitable for further manufacturing steps for making LFT articles, such as LFT injection moulding or a further extrusion process, and wherein the method is more economical and/or gives LFT material with improved properties.

US 2002/0089082 describes a method for the production of fibre-reinforced plastic compositions wherein an apparatus with a double screw plasticizing extruder is used, wherein melted plastic and a fibre material are combined in an entrance opening of the plasticizing extruder.

EP 1008435B1 describes a method for producing fibre-reinforced plastic masses by using a plastifying extruder, in which fibres and thermoplastic granulate and/or long-fibre-reinforced recyclate chips are plastified and are withdrawn as plastified material which can be further processed. Large-sized long-fibre-reinforced recyclate chips with a circular area of approx. 50 mm diameter and with a length of up to 200 mm are weighed in and introduced in a dosed manner into a heated tube worm conveyor device and are dried by pre-heating up to the point shortly before they become sticky. Thereafter the chips are introduced into the plastifying extruder.

### Summary

The invention pertains in a first aspect to a method of producing long fibre thermoplastic (LFT) extruded material, wherein the method comprises providing
- thermoplastic feed material;
- thermoplastic composite (TPC) feed material, for example flakes or chips, wherein the TPC feed material comprises pieces, wherein the pieces individually comprise both fibres and thermoplastic material;
   wherein the method comprises an extrusion step carried out in an extrusion system; wherein the extrusion system comprises an extruder having an extrusion direction; wherein the extruder comprises a barrel, a single screw, a first inlet opening and an outlet opening, wherein the screw provides a channel in the extruder; and wherein the extrusion step involves
- supplying the thermoplastic feed material and the TPC feed material to the extruder;
- conveying a mixture of the thermoplastic feed material and the TPC feed material in said extruder to said outlet opening to thereby give a compounded material; and
- extruding the compounded material through said outlet opening to give LFT extruded material.

The invention pertains in a further aspect to a long fibre thermoplastic (LFT) material obtainable by this method.

### Brief description of the drawings

Figure 1 schematically illustrates a first example extrusion system according to the invention.
Figure 2 schematically illustrates an example method according to the invention. In particular, Fig. 2A illustrates an example extrusion step and some other steps and Fig. 2B illustrates some example steps of providing the TCP feed. Fig. 2C illustrates an embodiment with combined extrusion and injection molding.
Figure 3 schematically illustrates a comparative method of making LFT articles.
Figure 4 displays the log-scale of fibre length distribution as measured in the injection molded bars of flakes + MFI-50.
Figure 5 displays the flexural modulus and strength, and impact properties measured after processing of samples in the same conditions.

### Detailed description

The present invention is broadly based on the judicious insight that LFT materials, for instance LFT pellets, that are suitable for manufacturing LFT articles, for example with LFT injection moulding and/or extrusion moulding, can be made in an advantageous way by using an extrusion step performed in an extruder comprising a screw, preferably in a single screw extruder, wherein thermoplastic material and TPC feed material are both supplied into the extruder, such that the TPC feed material is compounded with the thermoplastic material. This was found to surprisingly allow for low fibre attrition during the extrusion process.

The abbreviation "TPC" as used herein stands for "thermoplastic composite".

The material supplied to the extruder comprises TPC feed material. The TPC feed material comprises for instance TPC chips and/or TPC flakes. Other TPC feed materials are also possible. The TPC feed material comprises for instance discrete solid pieces of TPC material. The TPC feed material is for instance provided as solid pieces of TPC material. The pieces include, for example, TPC chips and/or TPC flakes.

The abbreviation "LFT" stands for "long fibre thermoplastic". A long fibre thermoplastic material, as used herein, indicates a material comprising, or substantially consisting of, or even essentially consisting of, a thermoplastic polymer and long fibres; wherein the polymer can be for instance a raw polymer or a polymer compounded with additives. Long fibres have a typical length of 0.5 to 50 mm, more preferable 1 to 20 mm, and most preferable 2 to 10 mm and have a typical diameter of 1.0-100 µm, 2-50 µm and most preferable 5-30 µm. In an LFT material, the long fibres are for instance embedded in the thermoplastic polymer, as is the case, for example, for fibres impregnated with a thermoplastic polymer. In an example embodiment, the TPC feed material comprises LFT material wherein the fibres are embedded in the thermoplastic polymer.

A thermoplastic composite (TPC) material, as used herein, indicates a material comprising, or substantially consisting of, or even essentially consisting of, a thermoplastic polymer and (dry, impregnated short, long and continuous or mixtures thereof) fibres; wherein the polymer can be for instance a raw polymer or a polymer compounded with additives and wherein the fibres are, for instance, dry or impregnated, and are for instance short or long, or continuous, or mixtures of any of such fibres. The TPC feed material as used herein is for example LFT feed material. In some embodiments of the TPC feed material, the fibres are embedded in the thermoplastic polymer, for instance in case of fibres impregnated with a thermoplastic polymer.

The discrete solid pieces typically have at least one dimension of at least 1.0 mm and typically have at least two perpendicular dimensions of at least 1.0 mm. The discrete solid pieces preferably individually comprise fibres and thermoplastic material.

In an example embodiment, the TPC feed material may comprise flakes of TPC material with a thickness of at least 100 µm, typically with a thickness of less than 50 mm and a smallest size in a direction perpendicular to the thickness direction of at least 1 mm, at least 10 mm, or at least 100 mm. The discrete pieces of the TPC feed material usually have a size of less than 10 cm in at least one dimension. In particular, the discrete pieces have a size of less than 10 cm in three dimensions.

The TPC feed material comprises for instance TPC flakes and/or TPC chips. Such TPC flakes have for instance a length of 2 mm to 40 mm, a width of 2 mm to 40 mm and a thickness less than the length and/or less than 5.0 mm; for instance with a thickness of 0.1 to 4.0 mm. TPC chips have for instance a length (L) of 2 to 50 mm, a width (W) of 2 to 50 mm and a thickness (H) of, for instance, 0.1 L < H < L. The TPC flakes have for instance an aspect ratio L/H of at least 10, for instance of at least 20. The TPC flakes have an edge and two sides, and for instance a surface area, per each of such side, of at least 5 mm² or at least 10 mm². The TPC flakes with such dimensions are for instance LFT flakes.

The TPC flakes are for instance obtainable by cutting or chopping material from a tape. The TPC chips are for instance obtainable by shredding CFRT (Continuous Fibre Reinforced Thermoplastic) material, such as shredding a laminate, or shredding an end of life part of TPC material. The TPC chips can also be obtained e.g. as production waste from a process of making CFRT sheets. The TPC feed material, such as flakes and chips, are typically abrasive because of the fibre content.

In some embodiments, the TPC feed material comprises for instance size-reduced (such as shredded) waste material, which waste material comprises or consists of TPC material. The TPC feed material is not restricted to any specific thermoplastic polymer and is also not restricted to specific fibrous materials.

In a highly preferred embodiment, which however does not limit the invention, the TPC feed material comprises the separated side edges (*e.g*. trims) of impregnated fibre layer, such as impregnated fibre tape or sheet. Such tapes are an intermediate stage in certain production methods for continuous fibre reinforced material. The material can also be e.g. chips issued from shredding of CFRT materials such as CFRT sheets or CFRT articles, such as CFRT car parts.

In some embodiments, the method of making LFT extruded material according to the present invention provides for the recycling of continuous fibre reinforced thermoplastic (CFRT) waste material. In some embodiments, the present invention pertains to a method of producing LFT extruded material, wherein the method comprises a providing such separated side edges as at least part of the feed stream.

Furthermore, the TPC feed material is in some embodiments at least in part provided by recycle streams of process of making CFRT materials and CFRT parts, components and articles and/or recycle streams from end of life CFRT articles.

It is an advantage of the invention that the TPC feed material as used in the present invention can be waste material. This provides the advantage that the method is an environmentally friendly method of processing the material and that the TPC feedstock is economical. The present invention provides a way of recycling certain materials which are hitherto considered as waste materials.

Moreover, the inventive process provides for a very elegant way to convert a waste material into a high quality recycled LFT material, for instance into high quality LFT pellets that can be used for LFT injection moulding. Thermoplastic feed material comprises a thermoplastic polymer, preferably a thermoplastic polymer as discussed herein, and is preferably non-reinforced and preferably comprises less than 1.0 wt.% non-polymeric components. The thermoplastic feed material for instance has an MFI of at least 50, with MFI measured according to ISO 1133-1. The thermoplastic feed material for instance comprises or consists of a polyolefin, e.g. polypropylene, with MFI of at least 50. The lower viscosity may advantageously contribute to good mixing.

The inventive method involves supplying the thermoplastic feed material and the TPC feed material to the extruder, e.g. providing these materials preferably after mixing as one combined stream into the extruder. The method further involves conveying a mixture of the thermoplastic feed material and the TPC feed material in the extruder, in particular in the channel, towards said outlet opening to thereby give a compounded material. The method further involves extruding the compounded material as formed inside the extruder through said outlet opening of the extruder to give LFT extruded material. In an integrated device, the outlet opening may be the outlet of an extruder compartment of the device. The order of steps indicates the positions in a continuous process system.

In a first preferred method of the invention, the thermoplastic feed material and the TPC feed material are supplied as one single stream of material in the extruder. The method of the invention then comprises supplying to the extruder a single feed stream (Z) comprising a mixture of the thermoplastic feed material and the TPC feed material. The mixture comprises e.g. at least 10 wt.% of the thermoplastic feed material and at least 10 wt.% of the TPC feed material and preferably comprises at least 95 wt.% or at least 99 wt.% of the TPC feed material and the thermoplastic feed material in total. The mass ratio of the TPC feed material and the thermoplastic feed material in the mixture can be adjusted to give a desired mas fraction of fibres in the product. Preferably, said mixture provides at least 99 wt.% of the total feed to the extruder, preferably is the only feed to the extruder. In some embodiments, said mixture is entirely supplied to only one inlet opening of the extruder and to not more than one opening of the extruder. In some embodiments, one opening of the extruder receives at least 90 wt.% of the total feed to the extruder, and preferably said opening receives said feed as said single feed stream (Z).

This single feed stream is fed through an inlet opening into the channel of the extruder. The method for instance comprises a step of mixing thermoplastic feed material and the TPC feed material in a mixing unit into a combined feed stream and supplying this feed stream to an inlet opening of the extruder. The combined feed stream is granular, i.e. composed of discrete solid particles. The mixing unit can be integrated into the extrusion system or can be a distinct unit. The extrusion system for instance comprises the mixing unit.

Preferably, the feed stream is supplied to the only inlet of the extruder, or to the most upstream inlet of the extruder. Preferably, the extruder channel immediately prior to receiving the feed stream from said mixing unit is empty, i.e. does not yet contain material.

In this embodiment, the thermoplastic feed material is preferably a solid material and is introduced into the extruder in the form of pellets. It may comprise one or more thermoplastic polymers, *i.e.* unreinforced thermoplastic polymer, which can be for instance virgin polymer, recycle polymer, or a combination of these.

The TPC feed material generally comprises for instance flakes or chips of TPC material, preferably of LFT material. The TPC feed material comprises pieces of TPC material, such as flakes or chips, wherein preferably individual pieces comprise fibres and thermoplastic material.

As discussed herein, the TPC feed material may be obtained from a CFRT material or CFRT article or part production process or from an end of life CFRT article or part. The CFRT article is for example a woven, a non-woven or a unidirectional CFRT article. The TPC feed material can for instance also be obtained from LFT parts and articles in general, such as from LFT injection moulded parts and articles and/or LFT extruded parts and articles, such as by shredding end of life LFT parts and articles. The TPC feed material can also be obtained as production waste from methods of making LFT parts and articles.

The TPC feed material, preferably as LFT feed material, comprises pieces, which pieces for example individually consist of at least partly impregnated fibres, wherein the fibres are partly or entirely impregnated with a thermoplastic polymer. The TPC feed material may also comprise other components such as dry fibres.

The TPC feed material comprises for instance substantially only one thermoplastic polymer, e.g. at least 90 wt.% of the thermoplastic fraction of the TPC feed material is a single polymer. Preferably, the polymer or polymer blend of the TPC material is the same polymer as the polymer or polymer blend used for the thermoplastic feed material.

The thermoplastic polymer is for instance a polymer selected from the group consisting of polyolefine, polyamides, polycarbonate, polyphenylene sulphide, polyaryletherketone, and polyethylenimine. The thermoplastic polymer is for instance polyethylene or polypropylene.

The term "thermoplastic polymer" as used herein includes at least plastic polymers that become pliable or mouldable at a certain elevated temperature and solidifies upon cooling.

In some embodiments, which do not limit the invention, the thermoplastic polymer is not cross-linked and is not cured.

The TPC feed material comprises fibres, wherein the fibres are for example selected from the group consisting of glass fibre, carbon fibre and natural fibre; wherein the natural fibre is for instance selected from the group consisting of hemp, flax, jute and cellulose fibres. The TPC feed material may comprise additional fibres. The TPC feed material comprises for instance at least 10 wt.% fibres or at least 20 wt.% fibres or at least 30 wt.% fibres, and typically less than 80 wt.% fibres.

It was surprisingly found that this method results in less fibree attrition than methods known in the art, as is e.g. evidenced by the measured glass fibre lengths in table 1 (Examples section).

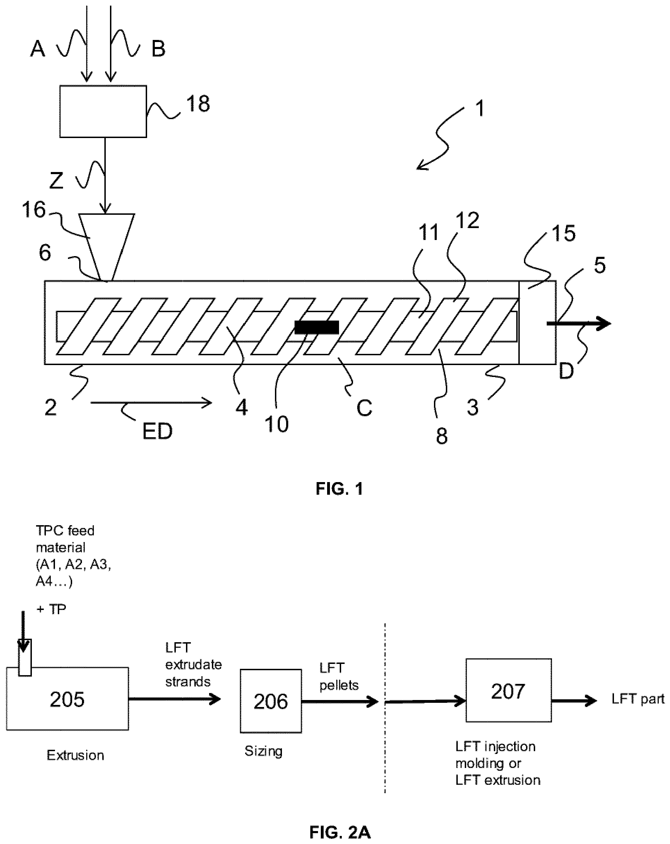

**Figure 1** schematically illustrates an example of this first preferred method according to the invention. The method is carried out in an apparatus comprising an extrusion system (1) which comprises an extruder (2). The extruder (2) comprises a barrel (3), and a single screw (4). The screw (4) is axially rotatable. The barrel is a hollow vessel, typically a cylindrical vessel having a length and a diameter. The screw is arranged in the barrel, typically in the length of the barrel, and comprises a cylindrical shaft (11) and a flight (12), typically one or more helical flights. The flight pitch is shown merely schematically. The screw provides for a channel (8) in the extruder adapted for receiving material to be extruded. In operation, material to be extruded is received in the channel through an inlet and conveyed by rotating the screw in the extrusion direction (ED) to the outlet opening (5). The material melts at least in part in the channel due to the shear action of the screw and barrel to form a melt, and the molten material is extruded into extruded material at the outlet opening which is typically provided in a die.

In the first preferred method of the invention, thermoplastic feed material (A) is mixed with TPC feed material (B) in a mixer (18) to give a mixed stream (Z) which is supplied to the extruder (2) to a first inlet opening (6) optionally through a first feeder (16). The mixture is conveyed through the extruder in the channel (8) to give a first mixed material (C). The term 'first inlet opening' indicates that there is no inlet opening upstream of the first inlet opening for feed material. The resulting compounded material (C) is conveyed to the die (15) and the LFT extruded material (D) is received from the outlet opening (5).

In a preferred embodiment, which does not limit the invention in any way, the TPC feed material is provided as follows:
B1) providing dry continuous fibres,
B2) impregnating said fibres with a thermoplastic resin to give an impregnated fibre continuous sheet having edges,
B3) separating at least part of said edges from said impregnated fibre continuous sheet to give flakes, which flakes are separated edge pieces and which flakes individually contain fibre and thermoplastic material, and a trimmed continuous sheet,
B4) using said flakes as at least part of said TPC feed material;
B5) optionally sizing the trimmed continuous sheet into sheets or tapes, and optionally making laminates from the sheets or tapes. The sheets, tapes or laminates are for instance placed in a mould and subjected to moulding (e.g. with heat) so as to a shaped CFRT article.

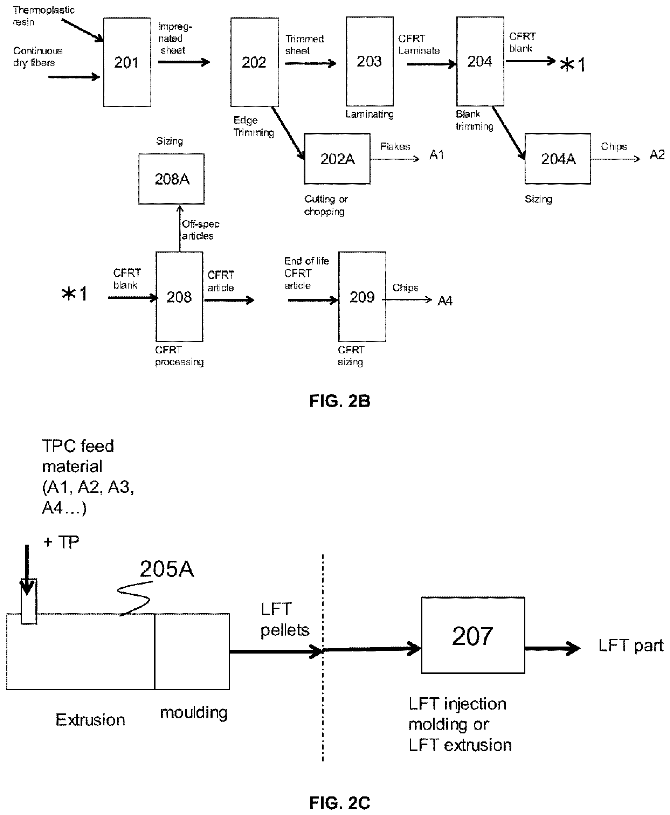

**Figure 2** schematically illustrates an example a preferred method according to the invention. In this preferred embodiment, which is an example only, the method of making LFT extruded material comprises, as illustrated in **Fig. 2A**, the extrusion step (205) using thermoplastic resin (TP) and TPC material, for instance LFT material (for example streams A1, A2, A3, A4 as illustrated in Fig. 2B, and combinations of these with each other and/or with other streams), to give LFT products such as extruded material strands, which are furthermore sized (206) (i.e. dimensioned, pelletized) into LFT pellets. Furthermore, the LFT pellets are optionally injection moulded or extruded (207) to give LFT parts; these parts are for instance LFT articles or LFT components.

In this preferred embodiment, the step of providing the feed material comprises a process for making CFRT material (**Fig. 2B**). The process comprises impregnating (201) a continuous dry fibres (e.g. glass fibres, natural fibre or carbon fibres) with thermoplastic polymer resin to give an impregnated continuous sheet or tape (single layer sheet). The fibres are for instance provided as woven or nonwoven or as unidirectional tape. The sheet, having edges of lower quality, is typically treated (202), e.g., trimmed, to remove these edges. The removed edges are cut or chopped and reduced in size (202A) and collected as LFT flakes (A1). In an example embodiment, the TPC feed material is provided by supplying such LFT flakes to the extrusion step. The sheet with edges removed is still a continuous sheet and is laminated (203) to CFRT material, such as CFRT laminate. The CFRT laminate is for instance trimmed (204) to give trimmed laminate (a "blank") and trimming waste. The trimming waste is for instance sized (*e.g*. shredded) into LFT chips (A2) which are for instance used as at least part of the TPC feed material.

The CFRT material can be used for processing (208) to give CFRT articles. For instance, the processing 208) is moulding the material by placing the solid CFRT material, such as CFRT blanks, in a mould, closing the mould and moulding the material using heat and/or pressure to give moulded CFRT article. The moulding stage is typically done separately from the manufacture of the CFRT sheets, e.g. after storage and transport of the CFRT material. Off-spec articles from the processing (208) can be sized (e.g. shred) to chips (A3) which are optionally used as at least part of the TPC feed material. Furthermore, end-of-life CFRT articles (e.g. post-consumer articles) can be sized (209) (such as shred) into chips (A4) which are optionally used as at least part of the TPC feed material. The illustrated TPC feed materials (A1, A2, A3 and A4) are only examples.

LFT flakes resulting from the edge removal step (202), *e.g.,* from the edge trimming step, are considered as a waste product in the prior art, and are, for instance, burned in an incinerator, or ground to dust in a grinding step in prior art methods. In the present invention, the LFT flakes, but also other types of TPC material, can be used as TPC feed material for the extrusion step (205) according to the invention, as part of the feed stream together with thermoplastic material, to produce LFT extruded material (extrudate). The inventive method in general further preferably comprises step of pelletizing (206) the LFT extruded material from the extrusion step (205) to give LFT pellets. These pellets are optionally stored and/or transported and can optionally be further used, for instance for LFT injection moulding.

The individual LFT pellets comprise the fibres and the thermoplastic material. The LFT pellets can be used for instance for LFT injection moulding (207). Comparative preparation methods for making LFT pellets are, as illustrated, based on combining (208) continuous fibres and thermoplastic resin to give continuous strands, wherein the combining step is for instance wire coating or pultrusion, and a further step of sizing (209) of the strands into LFT pellets.

The LFT pellets obtainable by the method the present invention are very suitable for LFT injection moulding. In such LFT injection moulding process (207), which is an optional further step of the inventive method, the LFT pellets are heated such that the thermoplastic fraction melts and the melt containing fibres is injected into the mould. The mould is closed and the material in the mould solidifies in the mould to give the injection moulded LFT part which is a shaped article and which comprises thermoplastic polymer and the fibres. The fibres desirably have a relatively long length within the shaped article. The injection moulded LFT part is for instance a car part.

In this preferred embodiment of the inventive method, the TPC flakes and TPC chips obtained essentially as waste material in a normal CFRT manufacturing process are surprisingly and very advantageously recycled into a high value product. This embodiment of the inventive method compares very favourable to currently used methods such as incinerating the flakes or chips or grinding the flakes or chips into dust, which dust can be used as low-cost fillers.

**Fig. 2C** illustrates embodiments wherein an integrated extruder / injection molding device 205A can be used. Such a device comprises both a plasticising unit and a molding unit. The plasticising unit is directly upstream of the molding unit and contains the inlet for the combined feed as well as the barrel and single screw. In some embodiment, only one screw is used, which is simpler than apparatuses with two screws in series. In some embodiments, only one single-screw barrel is used, which is again simpler than apparatuses with two barrels in series. The examples illustrated the surprisingly good mechanical properties of the materials obtained even in such simple units with only one barrel and only one screw with the method according to the invention.

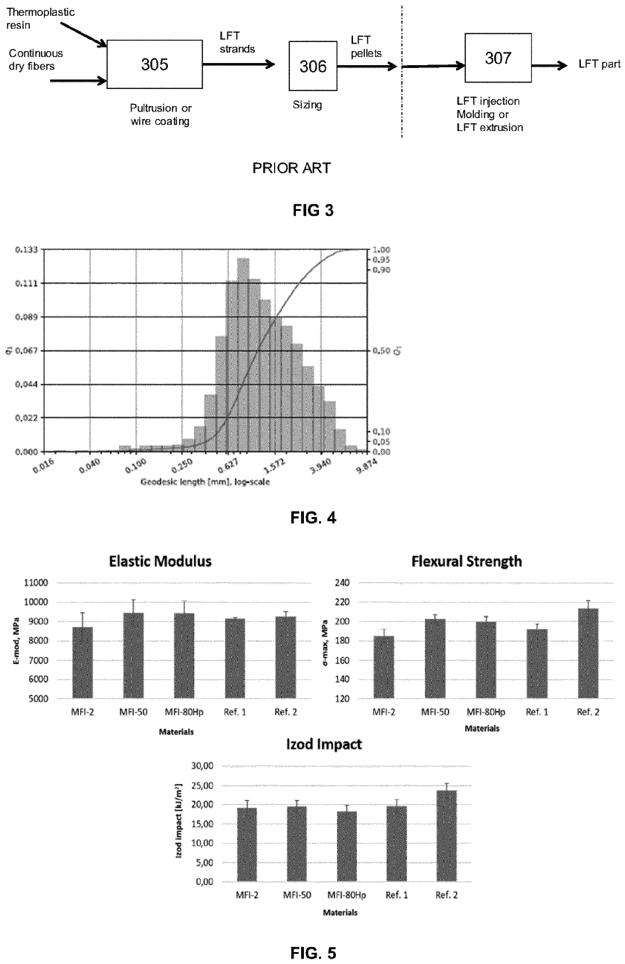

**Figure 3** schematically illustrates a comparative method of making LFT articles, not according to the invention. Herein, thermoplastic resin and continuous dry fibres are combined in a process (305) such as pultrusion or wire coating to give LFT strands which are sized (e.g. cut) (306) into pellets. The pellets can be used for LFT injection moulding and/or LFT extrusion (307).

In a preferred embodiment, the TPC feed material comprises flakes, chips, shredded material from a CFRT waste stream, or a combination thereof; more preferably in an amount of at least 90 wt.% or at least 95 wt.% of the total feed stream. The flakes or chips preferably consist of TPC material and can be obtained from any suitable source.

The present invention accordingly pertains in an aspect to a method of making long fibre thermoplastic (LFT) extruded material, such as extrudate strands or pellets.

In this preferred method, the thermoplastic feed material preferably does not contain fibres, specifically preferably does not contain thermosetting polymeric or non-polymeric fibres, or preferably less than 5.0 wt.% or less than 1.0 wt.% of such fibres in total relative to the thermoplastic feed material

The combined feed stream is preferably a solid material and is introduced into the extruder in the form of pellets. The thermoplastic feed material preferably comprises at least 80 wt.% unreinforced thermoplastic polymer, which can be for instance virgin polymer, recycle polymer, or a combination of these.

As discussed herein, the TPC feed material may be obtained from a CFRT material or CFRT article or part production process or from an end of life CFRT article or part. The CFRT article is for example a woven, a non-woven or a unidirectional CFRT article. The TPC feed material can for instance also be obtained from LFT parts and articles in general, such as from LFT injection moulded parts and articles and/or LFT extruded parts and articles, such as by shredding end of life LFT parts and articles. The TPC feed material can also be obtained as production waste from methods of making LFT parts and articles.

The TPC feed material, preferably as LFT feed material, comprises pieces, which pieces for example individually consist of at least partly impregnated fibres, wherein the fibres are partly or entirely impregnated with a thermoplastic polymer. The TPC feed material may also comprise other components such as dry fibres.

The TPC feed material comprises for instance substantially only one thermoplastic polymer, e.g. at least 90 wt.% of the thermoplastic fraction of the TPC feed material is a single polymer. Preferably, the polymer or polymer blend of the TPC material is the same polymer as the polymer or polymer blend used for the thermoplastic feed material.

The thermoplastic polymer as used in the TCP feed material and/or in the thermoplastic feed material is for instance a polymer selected from the group consisting of polyolefine, polyamides, polycarbonate, polyphenylene sulphide, polyaryletherketone, and polyethylenimine.

The term "thermoplastic polymer" as used herein includes at least plastic polymers that become pliable or mouldable at a certain elevated temperature and solidifies upon cooling.

In some embodiments, which do not limit the invention, the thermoplastic polymer is not cross-linked and is not cured.

Preferably the thermoplastic polymer feed comprises at least 80 wt.% based on total thermoplastic polymer feed, of the same polymer or polymer blend as used for at least 80 wt.% of the TPC feed material.

The TPC feed material comprises fibres, wherein the fibres are for example selected from the group consisting of glass fibre, carbon fibre and natural fibre; wherein the natural fibre is for instance selected from the group consisting of hemp, flax, jute and cellulose fibres. The TPC feed material may comprise additional fibres. The TPC feed material comprises for instance at least 10 wt.% fibres or at least 20 wt.% fibres or at least 30 wt.% fibres, and typically less than 80 wt.% fibres. The TPC feed material comprises for instance 30 to 70 wt.% fibres or e.g. 50 to 70 wt.% fibres. The method comprises an extrusion step which is carried out in an extrusion system. The extrusion system comprises an extruder which comprises a barrel with therein a screw and an outlet opening. The outlet opening is provided in a die at the downstream end of the extruder. The extruder has an extrusion direction which is in the length direction of the screw towards the outlet opening. The extruder is a single screw extruder, as opposed to a twin screw extruder. Hence, the barrel contains not more than one screw at each position in the length of the barrel. The barrel is heated e.g. to a temperature of at least 150°C or at least 200°C, e.g. in the range 230 - 280°C, as advantageously used in the present examples. For example the extrusion takes place at a temperature in these ranges.

The screw provides a channel in the extruder. The channel is an open space provided between the shaft of the screw, the flights, and the inner wall of the barrel. The barrel is for instance a cylindrical vessel. In operation, material is conveyed through the channel in the extrusion direction by the rotating action of the screw.

The extruder comprises a first inlet opening for supplying the thermoplastic feed material to the extruder. Optionally, the TPC feed material is also supplied via the first inlet opening. The first inlet opening comprises a first opening in the barrel for supplying the thermoplastic feed material and optionally the TPC feed material to the screw. When the thermoplastic feed material and the TPC feed material are both supplied via the first inlet opening, then they are supplied as a single feed stream (Z) comprising a mixture of the thermoplastic feed material and the TPC feed material (typically as a mixture of particles of each feed material) through the first inlet opening.

In the present invention, the extruder also typically contains the die. Hence, the die is typically arranged parallel with the screw and in the projection of the screw in the extrusion direction. The die is typically mounted or attached to the barrel containing these inlets.

The method optionally further comprises pelletizing the LFT extruded material, in particular the strands, into LFT pellets. Preferably the LFT pellets are suitable for LFT injection moulding and/or for LFT extrusion.

In some embodiments, an integrated extruder / injection molding device can be used, as illustrated in the examples.

Preferably, the LFT pellets have a length of in the range of 2-25 mm, preferably 6-15 mm. Pellets with such a length are particularly suitable for LFT injection moulding. Inventive methods may involve storage, packaging and/or transport of the LFT pellets between the pelletizing to form the pellets and the use of the pellets e.g. in injection moulding.

The invention pertains, in a further aspect, to the LFT extruded material obtainable with the method. The method allows for producing LFT extruded material with relatively long fibres and a relatively high fibre fraction using discontinuous long fibres.

The verb "comprising" as used herein indicates that other elements (components, steps, features) other than those recited may additionally be present.

### Examples

The invention will now be illustrated by the following Example(s) which are illustrative only and do not limit the invention or the claims.

### Example 1

### MATERIALS

Master spools made of polypropylene (PP) reinforced with around 70 wt.% of continuous glass fibres (GF) with a nominal thickness of 0.25 mm and weight of 600 mm were used basis for the investigation. These spools were slit into rolls of uni-directional tape of 12 mm width. These were then reduced in size by using a modified pelletizer to cut tapes instead of strands, producing flakes of length 5 mm (fibre direction) and width 12 mm (transverse direction). Virgin homopolymers of PP of varying melt flow index were used for the melt-processing dilution and a broad range of MFI, *i.e.* 2, 50 and 80 g/10 min (measured at 230 °C and 2.16 kg - ISO 1133) was investigated. MFI indicates melt flow index.

Reference samples were: Stamax^{®} 40YM240, supplied by Sabic^{®} acted as Ref. 1, and Celstran^{®} PP-GF40-02 by Celanese^{®} as Ref. 2. These materials contain both 40 wt. % GF and were selected as reference sample and compared after processing in the same conditions. The materials are both long glass fibre reinforced grades of pellets sizing ∼ 11mm in length.

### METHODS

PP/GF composites were prepared via melt processing in an Engel Victory 50 injection molder with a barrel and screw configuration (single screw: screw diameter of 30 mm and L/D screw-length of 20.5) of the plasticising unit. The extrusion or melt processing took place at 250 °C and a rpm of 13. The barrel and the mold were set at 250 °C and 80 °C, respectively. PP/GF flakes and virgin PP pellets were extruded or melt compounded into LFT extruded material and injection molded into ISO 527 standard tensile bars to reach a final concentration of 40 wt.% GF. The samples were labelled MFI-2, MFI-50 and MFI-80 in reference to the MFI of the pellets used for their compounding.

Tensile and flexural tests were performed on an Instron 5966 Universal Testing Machine. The tensile tests were measured following the ISO 527 standard at 5 mm/min using a clip-on extensometer. The flexural tests were carried out following the ISO 178 standard at a crosshead speed of 10 mm/min. Impact strength properties were measured in the Izod set-up, a notching cutter was used to notch all the specimens before testing. Notched Izod impact testing was performed on a Zwick/Roell Impact Tester according to the ISO 180 standard. For all the tests an average of 5 measurements was performed and the standard deviation was reported.

The glass fibre content after processing was measured and compared to the content of each original roll of tape. The GF content of both type of materials was obtained after burning off the PP matrix of a known amount of flakes or injection molded bars at 600 °C for 30 minutes. The test was repeated at least twice.

After ashing the polymer, the length of the remnant GF was measured using a IST-AG scanner and software. The measurements were repeated according to the ISO 9276-1/2 procedure. For each formulation, an average of 60,000 - 100,000 fibres was measured.

### RESULTS

### Morphological characterization

The master spools contained a fibre content varying between 65 and 72 wt.% GF. For sake of comparison and homogeneity, the flakes coming from a single roll of tape were used and the glass fibre content was measured at 69.5 ± 0.1 wt.%.

After injection molding, the untested bars were characterized and the glass fibre content and length were measured and compared to the materials of reference, see **Table 1.** The standard deviation of glass fibre contents of the recycled material was slightly higher, although still in the acceptable range (< 2 %) when compared to the reference materials. This difference can easily be explained by the difference of process involved to produce the bars. The recyclate flakes were dry blended with PP pellets before being processed while the reference materials coming from series production are homogeneous and were processed as received. As expected, the GF length after processing was significantly reduced, albeit all > 1 mm and thus by definition being LFT. The molded reference LFT bars showed higher remnant GF length at 40 wt.% fibres after injection molding. The difference obtained is due to the initial size of the input materials, while the fibre in the recyclates sized 5 mm in length, that of the materials of references were more than double, i.e. around 11 mm, as mentioned in **Table 1.** The particle size distribution measured after ashing the bars prepared with flakes and MFI-50 is shown in **Figure 4****.** In this Figure, q1 (left axis) stands for density distribution by length, and Q1(right axis) for cumulative distribution by length (mm). As it can be seen the range of fibre length is rather broad, which might be caused by the calculation method (*i.e*. geodesic length).

**Table 1: Expected and measured fibre content and fibre length after processing in the same conditions**

| Materials | Expected GF content, wt.% | Measured GF content, wt.% | GF length before processing, mm | Measured GF length after processing, mm |
|---|---|---|---|---|
| Flakes + PP MFI-2 | 40 | 39.4 ± 1.2 | 5 | 1.40 ± 1.11 |
| Flakes + PP MFI-50 | 40 | 41.4 ± 1.4 | 5 | 1.56 ± 1.22 |
| Flakes + PP MFI-80 | 40 | 37.2 ± 0.7 | 5 | 1.97 ± 1.66 |
| Ref. 1 | 40 | 40.5 ± 0.2 | 11 | 2.73 ± 3.47 |
| Ref. 2 | 40 | 39.9 ± 0.1 | 11 | 2.26 ± 2.01 |

### Mechanical performance

**Figure 5** shows the mechanical performance obtained by performing flexural and impact testing on the recycled and commercial materials, all processed at the same conditions. The elastic modulus measured for both recycled and virgin materials is around 9 GPa. In the elastic region the stiffness is known to be significantly dependent on the fibre content while the fibre-matrix interaction is not expected to have a significant effect. The higher standard deviation obtained with the use of recycled materials can be related to the higher standard deviation of the glass fibre content measured and reported in Table 1. That behavior is likely linked to the less homogeneous feeding of the dry blend as compared to the pellets of reference.

The use of impregnated and oriented pellets of sample Ref. 2 gives a slightly higher flexural strength (∼215 MPa) in comparison to the recycled materials and other material of reference (∼200 MPa), meaning a better resistance to deformation. This can be related to both the longer GF remnant after processing and a better bonding between PP and glass fibres due to the proper embedding of the pultruded fibres. Regarding the recycled materials processed with different MFI, it seems that a flexural strength optimum is reached with the use of low viscosity PP: MFI-50. The use of MFI-2 provided lower material strength which can be related to the improper mixing of this viscous phase, or residual stresses within the injection molded bars. The value of impact strength is related to many parameters like the fibre content, fibre length, and interaction fibre/matrix. All the recycled materials as well as sample Ref. 1 are in the same range, while sample Ref. 2 showed a slightly higher value which can be related to the longest glass fibres of this material. All the materials show an impact strength around 20 kJ/m². The MFI has no significant influence on that result.

### CONCLUSIONS

This Example 1 compares the performance of injection molded bars made of tape waste and commercial LFT pellets. Tapes containing high concentration of glass fibre were diluted with virgin PP of varying melt flow index to reach the final content of 40 wt.% GF. The melt flow index influenced significantly the flexural strength, while playing a minor role on the elastic modulus and impact strength. The results were correlated to the measured fibre content and fibre size of each material. This underlines the high potential of using composites waste in the production of LFT materials. Competitive mechanical properties have been obtained with the recycled materials compared to commercial reference samples.

## Claims

1. A method of producing long fibre thermoplastic (LFT) extruded material, wherein the method comprises providing
- thermoplastic feed material;
- thermoplastic composite (TPC) feed material, for example flakes or chips, wherein the TPC feed material comprises pieces, wherein the pieces individually comprise both fibres and thermoplastic material;
wherein the method comprises an extrusion step carried out in an extrusion system (1);
wherein the extrusion system (1) comprises an extruder (2) having an extrusion direction (ED);
wherein the extruder (2) comprises a barrel (3), a single screw (4), a first inlet opening (6) and an outlet opening (5), wherein the screw (4) provides a channel (8) in the extruder (2);
and wherein the extrusion step involves
- supplying the thermoplastic feed material and the TPC feed material to the extruder (2); then
- conveying a mixture of the thermoplastic feed material and the TPC feed material to said outlet opening (5) to thereby give a compounded material (C); then
- extruding the compounded material (C) through said outlet opening (5) to give LFT extruded material (D).

2. The method of claim 1, comprising
- supplying a single feed stream (Z) comprising a mixture of the thermoplastic feed material and the TPC feed material through said first inlet opening (6) into said channel (8) in the extruder (2); then
- conveying the mixture to said outlet opening (5) to thereby give the compounded material (C).

3. The method of any of claims 1-2, wherein the TPC feed material comprises flakes or chips or shredded material from a CFRT waste stream.

4. The method according to any of claims 1-3, wherein said step of providing thermoplastic composite (TPC) feed material comprises:
B1) providing dry continuous fibres,
B2) impregnating said fibres with a thermoplastic resin to give an impregnated fibre continuous sheet having edges,
B3) separating at least part of said edges from said impregnated fibre continuous sheet to give flakes, which flakes are separated edge pieces and which flakes individually contain fibre and thermoplastic material, and a trimmed continuous sheet,
B4) using said flakes as at least part of said thermoplastic composite (TPC) feed material.

5. The method according to any of claims 1-4, wherein the long-fibre reinforced thermoplastic material obtained with the method comprises 10-75 wt.% of fibres by total weight of the long-fibre reinforced thermoplastic material, preferably 30-60 wt.%.

6. The method according to any of claims 1-5, further comprising pelletizing said LFT extruded material into LFT pellets, wherein said pellets are suitable for LFT injection moulding and/or for LFT extrusion.

7. The method according to any of the claims 1-5, wherein the extrusion system (1) comprises an integrated injection molding unit and extruder.

8. A long fibre thermoplastic (LFT) material obtainable by the method according to any of the preceding claims.
